# EUROPÄISCHE PATENTANMELDUNG

(11) **EP 0 732 307 A2**
(43) Veröffentlichungstag der Anmeldung: **18.09.1996**
(21) Anmeldenummer: 96103143.2
(22) Anmeldetag: 01.03.1996
(51) Int. Cl.: C02F 3/14, B01D 21/02

(54) **Aus Stahlbeton bestehende Brücke für Abwasserbehandlungsbecken oder -gräben**

(30) Priorität: 16.03.1995 DE 29504460 U
(71) Anmelder: PASSAVANT-WERKE AG, D-65322 Aarbergen 7 (DE)
(72) Erfinder: Scmelz, Wolfgang, 56355 Nastätten (DE); Schönborn, Hubert, 65322 Aarbergen (DE); Söhngen, Hans-Hermann, 65582 Diez (DE); Werner, Detlef, 65623 Hahnstätten (DE)

(57) **Zusammenfassung**

Brücken für die Lagerung von horizontalachsigen Oberflächenbelüftern in umlaufbecken für die biologische Abwasserreinigung werden erfindungsgemäß aus mindestens zwei vorgefertigten, parallel zueinander auf den Beckenkronen versetzten Stahlbetonbalken und aus mehreren darauf verlegten, ebenfalls vorgefertigten Stahlbeton-Laufplatten hergestellt. Als Lärmdämmung und Spritzschutz kann an den Längsseiten der Brücke je ein aufrecht aufgestellter und bis in die Nähe des Wasserspiegels herabreichender Flachbalken benutzt werden. Die erfindungsgemäße Neugestaltung senkt die Kosten für die sonst in Ortbeton erstellten Brücken erheblich.

## Beschreibung

Die Neuerung bezieht sich auf eine auf der Krone von Abwasserbehandlungsbecken oder -gräben und vorzugsweise aus Stahlbeton hergestellte Brücke für die Lagerung und/oder den dem Schall- und/oder Spritzschutz dienenden Überbau von Oberflächenbelüftern und/oder Umwälzeinrichtungen. Die Oberflächenbelüfter sind in erster Linie horizontalachsige Walzenbelüfter, die mit einer Vielzahl von den Luftsauerstoff eintragenden Schlagelementen in Stab- oder Blattform bestückt sind.

Diese Brücken bestehen üblicherweise aus einem mit Unterzügen ausgestatteten Laufsteg und an beiden Längsseiten bis in die Nähe des Betriebswasserspiegels heruntergezogenen Wänden, die der Schalldämmung und dem Zurückhalten des bei dem Einschlagen des Luftsauerstoffs gebildeten Spritzwassers und der Aerosole dienen. Stahlbeton erfüllt in hohem Maße die Bedingungen für die Schalldämmung und ist ein preiswerter Werkstoff mit einer der Witterung widerstehenden dauerhaften und gleitsicheren Oberflächenbeschaffenheit.

Es ist bekannt, diese Brücken in Ortbetonbauweise zu erstellen. Dazu wird sogleich nach Fertigstellung des Beckens bzw. Grabens die Brücke eingerüstet und dreiseitig verschalt. Auch die Aussparungen und Konsolen für den Oberflächenbelüfter und ein äußerer Podest mit einem Aufgang müssen geschalt und geformt werden. Das Zurichten und Verlegen der Bewehrungen ist sehr lohnkostenintensiv. Eine spätere Demontage der Brücke ist nicht mehr möglich (DE-PS-16 57 337).

Die Aufgabe, eine preisgünstigere und flexiblere Bauweise für die Brücken zu finden, wird nunmehr neuerungsgemäß dadurch gelöst, daß die Brücke aus mindsestens zwei vorgefertigten, parallel zueinander auf den Beckenkronen versetzten Stahlbetonbalken, aus mehreren darauf verlegten und ebenfalls vorgefertigten Laufstegplatten und aus zwei an den Längsseiten des Laufstegs angeordneten, bis in die Nähe des Betriebwasserspiegels herabreichenden Flachbalken zusammengesetzt ist. Es wird also jetzt eine Bauweise aus Fertigbetonteilen angewendet, die Vorfertigung außerhalb der Baustelle erlaubt und das lohnintensive Einrüsten, Einschalen und Bewehren vermeidet. Diese neue Bauweise hat darüber hinaus den Vorteil, den nachträglichen Abbau oder das Versetzen der Brücke an eine andere Stelle des Beckens zu ermöglichen. Kranfahrzeuge zum Versetzen der Stahlbetonbalken und Laufstegplatten sind vorhanden. Die Montagezeit für eine solche Brücke ist außerordentlich kurz. Wenn die Stahlbetonfertigteile beim Versetzen wie üblich mit einer Dichtung an den Stoßstellen versehen und/oder die Fugen anschließend vergossen werden, sind auch die Bedingungen für den Schall- und Spritzschutz optimal erfüllt.

Für die Brücke werden vorzugsweise drei identisch profilierte Stahlbetonbalken eingesetzt, die parallel zueinander im gleichen Abstand verlegt werden. Die eine Hälfte der Brücke dient dann als Laufsteg und die andere der Aufhängung und/oder dem Überbau des Oberflächenbelüfters mit seinen Lagern und seinem Antrieb. Die Stahlbetonbalken bekommen vorteilhafterweise an den oberen Ecken des Profils eine Abstufung, deren Tiefe der Dicke der Laufstegplatten entspricht. An den nicht benutzten Abstufungen der äußeren Balken kann das Geländer befestigt werden.

Die Antriebe der Oberflächenbelüfter bzw. Umwälzeinrichtungen müssen mit Strom versorgt und gesteuert werden. Bei den in Ortbeton erstellten Brücken werden diese Kabel unter der Brücke verlegt und müssen dann gegen das Spritzwasser gekapselt werden. Bei der Neuerung wird die Kabelverlegung und -kapselung dadurch vereinfacht, daß wenigstens einer der Stahlbetonbalken einen durch eine verlorene Rohrschalung gebildeten Kabelkanal erhält, in dem die Kabel gegen Spritzwasser geschützt verlegt werden. Der Kabelkanal liegt in der neutralen Faser des Balkens und bedeutet zusätzlich noch eine erhebliche Gewichtsersparnis.

Ein weiterer Vorteil der Fertigteilbauweise mit drei identisch profilierten Stahlbetonbalken ist darin zu sehen, daß die Lage des Belüftungsrotors noch später geändert werden kann. Der Oberflächenbelüfter kann in beide spiegelbildlich gleich ausgebildete Felder der Brücke eingebaut werden. Die Umlaufrichtung im Becken ist somit frei wählbar. Die Brücke ist auf der Abströmseite immer gleich ausgebildet.

Wenn die Brücke einen Podest und einen Aufstieg erhalten muß, dann kann diese Vorgabe dadurch erfüllt werden, daß mindestens zwei benachbarte Stahlbetonbalken über die äußere Beckenkrone hinaus verlängert sind und dort, einen Podest bildend, mit Laufstegplatten belegt werden. Eine weitere Ausgestaltung der Neuerung betrifft den seitlichen Abschluß der Brücke über der Beckenkrone. Dadurch, daß dort zwischen den Stahlbetonbalken Öffnungen vorhanden sind, kann Spritzwasser austreten. Die Öffnungen werden neuerungsgemäß durch in Vertikalnuten in den Stahlbetonbalken eingesteckte, hochkant versetzte Flachbalken geschlossen.

Die Flachbalken können etwas über die Abstufung für die Laufstegplatten überstehen, und in den überstehenden Abschnitt faßt die an der Unterseite der dort verlegten Laufstegplatte vorgesehene Nut ein. Dadurch sind auch alle zwischen diesen Platten verlegten Laufstegplatten gegen Verschieben gesichert. Ferner kann der Flachbalken in eine auf der Beckenkrone eingebrachte Längsnut greifen und dadurch die Brücke selber in Beckenlängsrichtung fixieren.

Weitere Ausgestaltungen der Neuerung, die in anderen Unteransprüchen erwähnt sind, werden nachfolgend anhand eines in den Zeichnungen dargestellten bevorzugten Ausführungsbeispiels erläutert. Es zeigen:
- Fig.1: eine Draufsicht auf eine fertig auf den Kronen eines Abwasserbehandlungsbeckens montierte Brücke,
- Fig.2: den Schnitt durch Fig.1 entlang der Schnittlinie II-II,
- Fig.3: den Schnitt durch Fig.1 entlang der Schnittlinie III-III,
- Fig.4: den Schnitt durch Fig.1 entlang der Schnittlinie IV-IV.

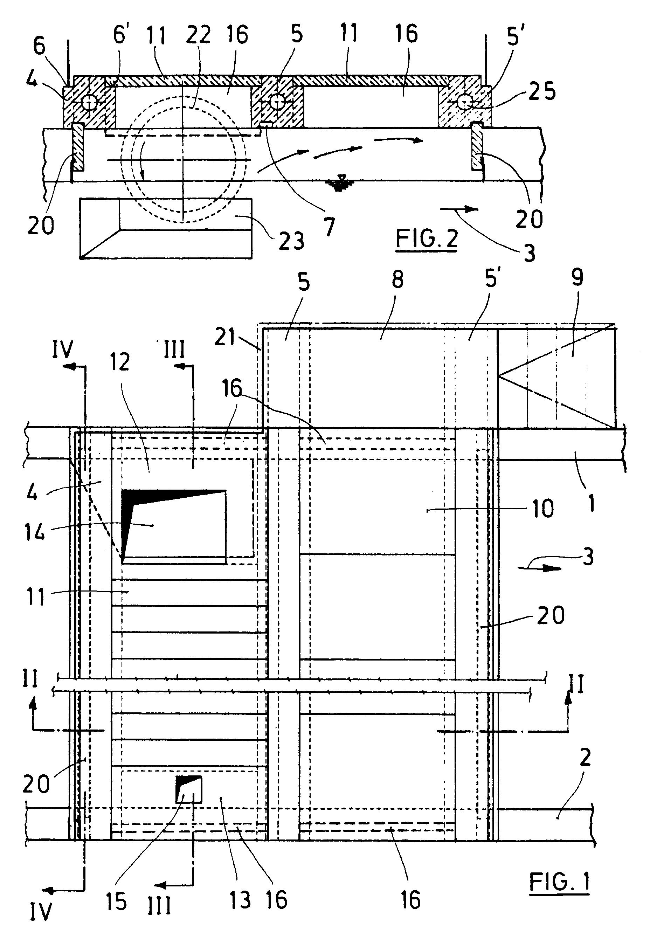

In der Draufsicht nach Fig.1 sind die Kronen der beiden Beckenwände 1,2 längsverlaufend zu sehen. Das Abwasser in dem Becken wird durch die Oberflächenbelüfter und ggf. zusätzlich vorgesehene Umwälzeinrichtungen in Pfeilrichtung 3 in Umlauf gebracht und gehalten. Die Beckenwand 2 kann bei einem geschlossenen Längsbecken die Mittelwand sein, die an beiden Enden in Kehren umströmt wird. Es kann dann auf der anderen Seite der Mittelwand eine gleich dimensionierte Brücke für einen Oberflächenbelüfter vorhanden sein. Die zweite Brücke wird wie auch die erste auf der Hälfte der Krone abgestützt und wird mit der ersten zu einer durchgehend begehbaren Doppelbrücke ergänzt.

Zu der aus Stahlbetonfertigteilen zusammengesetzten Brücke gehören Stahlbetonbalken 4, 5, 5' mit identischem Profil, d.h an den oberen Ecken je eine Abstufung 6, 6' und an der Unterseite eine außermittige Längsnut 7. Zwei der drei Balken 5, 5' sind länger und kragen nach außen über, wo ein Podest 8 gebildet und eine Treppe 9 angehängt ist. Die mit der aus Festigkeitsgründen eingebrachten Bewehrung versehenen Stahlbetonbalken werden im gleichen Abstand auf die Beckenkronen versetzt und dann mit im Rastermaß vorgefertigten Laufstegplatten 10, 11 belegt, die ebenfalls bewehrt sind. Die Endplatten 12,13 des Brückenteils, der den Oberflächenbelüfter überbaut, haben Sondermaße und besitzen je eine Öffnung 14, 15 für die Wartung des Getriebeantriebs und der Lager des Oberflächenbelüfters. Auch diese Öffnungen werden später aus Gründen der Schalldämmung abgedeckt.

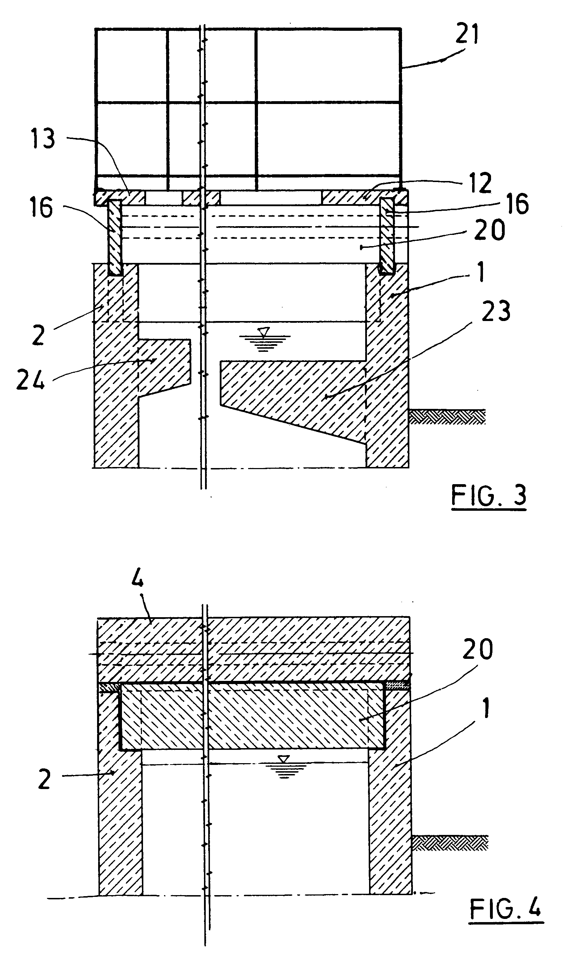

Die an den Stirnseiten der Stahlbetonbalken über der Beckenkrone liegenden Öffnungen sind durch Flachbalken 16 verschlossen. Wie insbesondere Fig. 3 und Fig. 4 zeigt, sind die Flachbalken 16 sowohl in eine Vertikalnut im Stahlbetonbalken als auch in eine Horizontalnut in der Beckenkrone gesteckt. Da sie über die Abstufung im Balken etwas überstehen, können sie in eine an der Unterseite der Endplatten 12, 13 vorgesehene weitere Nut eingreifen und dadurch die Endplatten und alle anderen Laufstegplatten gegen Verrutschen sichern. Auch die Stahlbetonbalken werden durch den in die Nut der Beckenkrone eingreifenden Flachbalken in allen Richtungen fixiert. Alle Stahlbetonfertigteile werden beim Versetzen mit Vergußmasse und/oder Klebmittel abgedichtet.

Unter den beiden äußeren Stahlbetonbalken 4, 5' sind als Flachbalken ausgebildete Schließwände 20 eingesetzt, die als Spritz- und Aerosolsperre wirken. Die Schließwände sind in kurze Vertikalnuten der Beckenwände eingeschoben und ragen mit ihrem oberen Überstand in die Längsschlitze der Stahlbetonbalken. Auch diese Stecktechnik bedeutet eine Verschiebesicherung und eine bessere Abdichtung. Das Formen der Schlitze und Nuten in den Beckenwänden wird mit Hilfe von nachher zerstörten Hartschaumstücken bewerkstelligt.

In der außenliegenden Abstufung der beiden äußeren Balken 4, 5' wird noch das Schutzgeländer 21 befestigt, das bei der gezeigten Einzelbrücke auch einen Abschluß zur Beckenmitte bildet.

Zur Auflagerung des Oberflächenbelüfters 22 dienen zwei an den beiden Beckenwänden anbetonierte Betonkonsolen 23, 24. Nur diese Konsolen müssen geschalt und in Ortbetonbauweise gegossen werden. Sie sind, da sie unter Wasser liegen, in Anströmrichtung etwas abgeschrägt, um das Abwasser möglichst ohne Verwirbelung zur Belüftungsstelle weiterzuleiten.

Für die Stromzuführung zum Getriebemotor des Oberflächenbelüfters 22 ist in allen Stahlbetonbalken ein Kabelkanal 25 vorgesehen, der durch ein Leerrohr geformt ist.

## Patentansprüche

1. Aus Stahlbeton hergestellte, auf der Krone von Abwasserbehandlungsbecken oder -gräben abgestützte Brücke für die Lagerung und/oder den dem Schall- und Spritzschutz dienenden Überbau von Oberflächenbelüftern und/oder Umwälzeinrichtungen, bestehend aus einem Brückenlaufsteg (mit Unterzügen und Geländer) und an beiden Längsseiten bis nahe an den Betriebswasserspiegel heruntergezogenen Schall- und Aerosolschutzwänden, **dadurch gekennzeichnet**, daß die Brücke aus mindestens zwei vorgefertigten, parallel zueinander auf den Beckenkronen versetzten Stahlbetonbalken (4, 5, 5'), aus mehreren darauf verlegten und ebenfalls vorgefertigten Laufstegplatten (10, 11, 12, 13) und aus zwei an den Längsseiten verlegten, bis in die Nähe des Betriebswasserspiegels herabgezogenen, vorgefertigten Flachbalken (20) zusammengesetzt ist.

2. Brücke nach Anspruch 1, **dadurch gekennzeichnet**, daß die Stahlbetonbalken (4, 5, 5') oben an beiden Kanten längsdurchlaufende Abstufungen (6, 6') zum Einlegen der Laufstegplatten (10, 11, 12, 13) aufweisen.

3. Brücke nach Anspruch 2, **dadurch gekennzeichnet**, daß die Tiefe der Abstufungen (6, 6') der Dicke der Laufstegplatten (10, 11, 12, 13) entspricht.

4. Brücke nach Anspruch 1 bis 3, **dadurch gekennzeichnet**, daß mindestens einer der Stahlbetonbalken (4, 5, 5') einen durch eine verlorene Rohrschalung eingeformten Kabel- und Leitungskanal (25) aufweist.

5. Brücke nach Anspruch 1 bis 4, **dadurch gekennzeichnet**, daß an der Unterseite jedes Stahlbetonbalkens (4, 5, 5') ein außerhalb der Profilmitte liegender Längsschlitz zum Einfugen eines Flachbalkens (20) vorgesehen ist.

6. Brücke nach Anspruch 1 bis 5, **dadurch gekennzeichnet**, daß die Stahlbetonbalken (5, 5') bis über die Beckenkrone (1) nach außen verlängert sind und an dieser Verlängerung einen aus eingelegten Laufstegplatten (10) bestehenden Podest und ggf. eine Treppe (9) tragen.

7. Brücke nach Anspruch 1 bis 5, **dadurch gekennzeichnet**, daß die Brücke aus drei identisch profilierten Stahlbetonbalken (4, 5, 5') zusammengesetzt ist, wobei der Zwischenraum zwischen dem mittleren (5) und einem äußeren Stahlbetonbalken (5') von dem Oberflächenbelüfter (22) eingenommen wird.

8. Brücke nach Anspruch 6, **dadurch gekennzeichnet**, daß mindestens zwei der über den Oberflächenbelüfter (22) verlegten Laufstegplatten (12, 13) Aussparungen (14, 15) für die Wartung der Lager und des Antriebs des Oberflächenbelüfters (22) aufweisen.

9. Brücke nach Anspruch 1 bis 8, **dadurch gekennzeichnet**, daß in den Becken- bzw. Grabenwänden (1, 2) nach oben offene vertikal verlaufende U-förmige Aussparungen zum Einstecken der Flachbalken (20) eingeformt sind.

10. Brücke nach Anspruch 1 bis 9, **dadurch gekennzeichnet**, daß die Zwischenräume zwischen je zwei Stahlbetonbalken (4, 5; 5, 5') auf der Beckenkrone (1,2) durch hochkant versetzte flache Schließbalken (16) geschlossen sind.

11. Brücke nach Anspruch 10, **dadurch gekennzeichnet**, daß in den Stahlbetonbalken (4, 5, 5') im Bereich der Beckenkronen (1, 2) vertikale Nuten zum Einstecken der flachen Schließbalken (16) vorgesehen sind.

12. Brücke nach Anspruch 10 oder 11, **dadurch gekennzeichnet**, daß die flachen Schließbalken (16) über die Abstufungen (6, 6') hochragen und daß der überragende Abschnitt in eine an der Unterseite der zugehörigen Laufstegplatte (12, 13) vorgesehene Nut eingreift.

13. Brücke nach Anspruch 10, 11 oder 12, **dadurch gekennzeichnet**, daß in der Beckenkrone (1, 2) eine Nut zum Einstecken der flachen Schließbalken (16) vorgesehen ist.

14. Brücke nach Anspruch 1 bis 13, **dadurch gekennzeichnet**, daß die Konsolen (23, 24) für den Antrieb und die Lager des Oberflächenbelüfters (22) als nachträglich an die Beckenwände (1, 2) anbetonierte Betonpodeste (23, 24) ausgebildet sind.
